# EUROPÄISCHE PATENTSCHRIFT

(11) **EP 0 459 104 B1**
(45) Veröffentlichungstag und Bekanntmachung des Hinweises auf die Patenterteilung: **23.10.1996**
(21) Anmeldenummer: 91104980.7
(22) Anmeldetag: 28.03.1991
(51) Int. Cl.: F16G 13/06, F16G 13/18, B66F 9/20

(54) **Flyerkette**
Flyer chain
Chaîne à maillons du type "flyer"

(30) Priorität: 31.05.1990 DE 9006153 U
(43) Veröffentlichungstag der Anmeldung: 04.12.1991
(73) Patentinhaber: REXNORD KETTE GMBH & CO. KG, D-57501 Betzdorf (DE)
(72) Erfinder: Frenker-Hackfort, Ludger, W-5242 Kirchen-Heckersdorf (DE)
(74) Vertreter: König, Reimar, Dr.-Ing.

(56) Entgegenhaltungen:
- EP-A- 0 066 530
- WO-A-89/11602
- DE-U- 8 502 425
- DE-U- 9 006 153
- GB-A- 2 153 041
- GB-A- 2 194 308
- ANTRIEBSTECHNIK, Band 13, Nr. 5, 1974, Seite 235, Frankfurt, DE; Werbung: "Arnold & Stolzenberg GmbH"

## Beschreibung

Die Erfindung betrifft eine Flyerkette mit mittels Kettenbolzen gelenkig miteinander verbundenen laschenförmigen Kettengliedern aus Außenlaschen und Zwischenlaschen sowie mit nichtmetallischen Abdeckungen mit einer Schirmfläche für die einer Umlenkrolle abgewandten Außenflächen der Kettenglieder und mit mindestens einem zu den Außenlaschen und/oder den Zwischenlaschen benachbart angeordneten, Durchgangsbohrungen für die dort hindurchgesteckten Kettenbolzen aufweisenden Steg.

Derartige Flyerketten, wie sie als Lastketten überwiegend in Gabelstaplern eingesetzt werden, sind mit beliebiger Kombination und Anzahl der Kettenlaschen pro Kettenglied bekannt. Bei einer durch die britische Offenlegungsschrift 2 153 041 bekanntgewordenen Flyerkette, die dem Oberbegriff des Anspruchs 1 entspricht, sind Laschen aus Kunststoff als separater Bestandteil zwischen den Laschen der Kettenglieder integriert und weisen an einer oder beiden Seiten quer zur Längsachse der Kettenbolzen gegenüber den Kettengliedern vorspringende freie Flächen auf. Die Kunststofflaschen bewirken, daß beim unvermeidlichen Schwingen oder Verkanten der Kette nicht die Kettenglieder, sondern die demgegenüber vorspringenden Kunststofflaschen gegen die Kolbenstange eines Hydraulikzylinders schlagen. Denn das Verstellen der Lastgabel eines Gabelstaplers geschieht mittels eines Hydraulikzylinders, der die als Flyerketten ausgebildeten, über Umlenkrollen geführten Antriebsketten reversierend beaufschlagt. Aufgrund der mit freien Flächen quer zur Längsachse der Kettenbolzen vorspringenden Schutzlaschen trifft selbst eine sich sehr stark verkantende bzw. verdrehende Kette immer noch mit einer Kunststofflasche auf das zu schützende benachbarte Bauteil auf, wie insbesondere die Kolbenstange eines Hydraulikzylinders. Mit dieser bekannten Flyerkette läßt sich allerdings nicht verhindern, daß über die Kette gleitende Versorgungsleitungen, wie insbesondere Hydraulikschläuche, beschädigt werden, die sich nämlich an den ihnen zugewandten metallischen Außenflächen der Kettenglieder reiben und verschleißen.

In der britischen Offenlegungsschrift 2 194 308 ist eine Abdeckung für Fahrradketten beschrieben, die aus U-förmigen Elementen besteht, deren die Fahrradkettenglieder umgreifende Schenkel mit Fortsätzen versehen sind, die die Kettenglieder untergreifen und dadurch den Halt der Elemente an der Fahrradkette gewährleisten.

Des weiteren ist aus der deutschen Gebrauchsmusterschrift 85 02 425 eine Flyerkette bekannt, die jedoch lediglich seitliche erhöhte Führungen für Schläuche aufweist, die somit direkt auf den Kettenlaschen liegen und daher einem starken Verschleiß unterliegen.

Der Erfindung liegt die Aufgabe zugrunde, eine Gliederkette, insbesondere Flyerkette, der eingangs genannten Art zu schaffen, mit der sich mit der Kette in Berührung kommende Versorgungsleitungen schützen lassen.

Diese Aufgabe wird durch die Merkmale des Anspruchs 1 gelöst. Hierbei sind die Abdeckungen mit sich über die Breite der einer Umlenkrolle abgewandten Außenfläche der Kettenglieder erstreckender, in Längsrichtung der Flyerkette konvexer und in Querrichtung der Flyerkette konkaver Schirmfläche ausgebildet, derart, daß sich über die Flyerkette gleitende Versorgungsleitungen auf den Schirmflächen zentrieren.

Die den Versorgungsschläuchen zugewandte, von dem Kettenrad/der Umlenkrolle abgewandte Oberfläche der Kette ist somit nach außen völlig abgeschirmt; die Versorgungsschläuche gleiten ausschließlich über die beispielsweise aus einem schlagzähen Material wie Polyacetal oder Niederdruckpolyäthylen bestehenden Kunststoffabdeckungen oder auch Abdeckungen aus Hartgummi. Ein Reiben und Verschleißen des bzw. der Versorgungsschläuche aufgrund eines Kontaktes mit einer metallischen Oberfläche wird somit verhindert.

Bei mit ihren Stegen zwischen Laschen der Kettenglieder eingesetzten T-förmigen Abdeckungen erstrecken sich die - gegebenenfalls unterschiedlich langen - Flansche der T-Stücke in Richtung der Längsachse der Kettenbolzen über die Breite der Kettenglieder.

Alternativ lassen sich mit ihren als Flansche ausgebildeten Stegen die Außenlaschen der Kettenglieder übergreifende U-förmige Abdeckungen oder mit ihrem einen als Schenkel ausgebildeten Steg an den Außenlaschen der Kettenglieder anliegende und mit ihrem anderen Schenkel die Außenfläche der Kettenglieder übergreifende, L-förmige Abdeckungen vorsehen. Die Abdeckungen sind wie die Laschen der Kettenglieder mit Durchgangsbohrungen versehen und auf den Kettenbolzen angeordnet.

Wenn zumindest die Ecken der Schirmflächen abgerundet sind, lassen sich für die Versorgungschläuche scharfe Kanten der Gleitflächen vermeiden.

Die Erfindung wird nachfolgend anhand einiger in der Zeichnung dargestellter Ausführungsbeispiele näher erläutert. In der Zeichnung zeigen:
- Fig. 1: im Bereich einer Umlenkrolle dargestellte Kettenglieder einer Gliederkette mit den erfindungsgemäßen Abdeckungen, im Längsschnitt;
- Fig. 2: einen Querschnitt durch die Gliederkette entlang der Linie II-II von Fig. 1;
- Fig. 3: eine erfindungsgemäße, L-förmige Abdeckung; und
- Fig. 4: eine erfindungsgemäße, U-förmige Abdeckung.

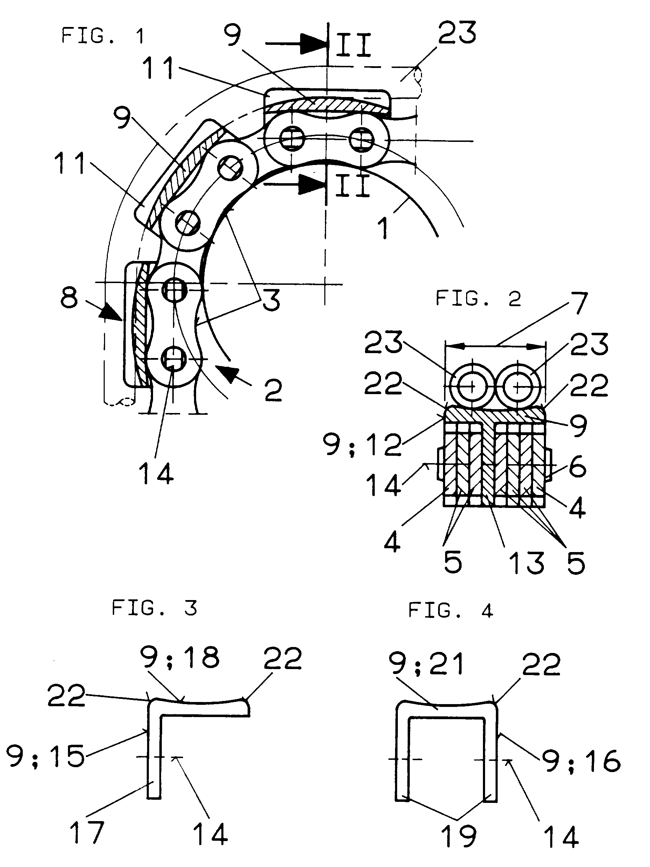

Die über eine Umlenkrolle 1 geführte Flyerkette 2 besteht aus Kettengliedern 3, von denen in Fig. 1 lediglich drei dargestellt sind. Jedes Kettenglied 3 setzt sich aus Außenlaschen 4 sowie Zwischenlaschen 5 zusammen, die durch Kettenbolzen 6, insbesondere Nietbolzen, gelenkig miteinander verbunden sind (vgl. Fig. 2).

Über die Breite 7 der der Umlenkrolle 1 abgewandten Außenflächen 8 der Kettenglieder 3 erstrecken sich Schirmflächen 9 nichtmetallischer Abdeckungen 11. Bei der Ausführung gemäß den Fig. 1 und 2 sind die Abdeckungen 11 als T-Stücke 12 ausgebildet, deren Stege 13 wie die Laschen 4,5 mit Durchgangsbohrungen 14 für die dort zur Befestigung hindurchgesteckten Kettenbolzen 6 versehen und zwischen die Zwischenlaschen 5 der Kettenglieder 3 eingesetzt sind. Alternativ können die Abdeckungen 11 als L-Stücke 15 oder U-Stücke 16 ausgebildet sein, wie in den Fig. 3 und 4 dargestellt. Bei in die Kette eingesetzten L-Stücken 15 übergreift der eine als Schenkel 17 ausgebildete Steg eine Außenlasche 4 des Kettengliedes 3 der Flyerkette 2 und der andere Schenkel 18 bildet die die Kettenglieder 3 über ihre Breite 7 abdeckende Schirmfläche 9. Die über die Kettenglieder 3 aufgesetzten U-Stücke 16 übergreifen mit ihren als Flansche 19 ausgebildeten Stegen die beiden Außenlaschen 4 und ihr Steg 21 bildet die die Außenfläche 8 der Kettenglieder 3 abdeckende Schirmfläche 9.

Die Ecken 22 der Schirmflächen 9 der Abdeckungen 11 sind abgerundet und die Außenseiten in Querrichtung, d.h. über die Breite der Kettenglieder 3 gesehen konkav ausgebildet, so daß sich über die Flyerkette 2 gleitende Versorgungsschläuche 23 dort zentrieren (vgl. Fig. 2). Wie in Fig. 1 dargestellt ist, sind die den Versorgungsschläuchen 23 zugewandten Außenseiten 24 der Schirmflächen 9 in Längsrichtung, d.h. in Laufrichtung der Flyerkette 2 konvex ausgebildet; diese nach außen gewölbte Kontur bewirkt ein Anheben der Versorgungsschläuche 23, die somit besser auf die Flyerkette 2 auflaufen bzw. sich in den Umkehrpunkten besser von dieser entfernen. Während ihres Kontaktes mit der Flyerkette 2 liegen die Versorgungsschläuche 23 jedoch stets auf nichtmetallischen Abdeckungen 11 auf, so daß sie schonend, ohne zerstörenden Reibeinflüssen zu unterliegen, über die Flyerkette 2 gleiten können.

## Patentansprüche

1. Flyerkette mit mittels Kettenbolzen (6) gelenkig miteinander verbundenen laschenförmigen Kettengliedern (3) aus Außenlaschen (4) und Zwischenlaschen (5) sowie mit nichtmetallischen Abdeckungen (11) mit einer Schirmfläche (9) für die einer Umlenkrolle (1) abgewandten Außenflächen (8) der Kettenglieder (3) und mit mindestens einem zu den Außenlaschen (4) und/oder den Zwischenlaschen (5) benachbart angeordneten, Durchgangsbohrungen (14) für die dort hindurchgesteckten Kettenbolzen (6) aufweisenden Steg (13, 17, 19), dadurch gekennzeichnet*,* daß die Abdeckungen (11) mit sich über die Breite (7) der der Umlenkrolle (1) abgewandten Außenfläche (8) der Kettenglieder (3) erstreckender, in Längsrichtung der Flyerkette (2) konvexer und in Querrichtung der Flyerkette (2) konkaver und Schirmfläche (9) ausgebildet sind, derart, daß sich über die Flyerkette (2) gleitende Versorgungsleitungen (23) auf den Schirmflächen (9) zentrieren.

2. Flyerkette nach Anspruch 1, gekennzeichnet durch mit ihren Stegen (13) zwischen den Laschen (5) der Kettenglieder (3) eingesetzte T-förmige Abdeckungen (12).

3. Flyerkette nach Anspruch 1, gekennzeichnet durch mit ihren Flanschen (19) die Außenlaschen (4) der Kettenglieder (3) übergreifende U-förmige Abdeckungen (16).

4. Flyerkette nach Anspruch 1, gekennzeichnet durch mit ihrem einen Schenkel (17) an den Außenlaschen (4) der Kettenglieder (3) anliegende und mit ihrem anderen Schenkel (18) die Außenfläche (8) der Kettenglieder (3) übergretfende, L-förmige Abdeckungen (15).

5. Flyerkette nach einem oder mehreren der Ansprüche 1 bis 4, dadurch gekennzeichnet, daß zumindest die Ecken (22) der Schirmflächen (9) abgerundet sind.

## Claims

1. Flyer chain having plate-type chain links (3) connected together in articulated manner by means of link pins (6) and made up of outer link plates (4) and intermediate link plates (5) and having non-metallic covers (11) which include a protective surface (9) for the outer surfaces (8) of the chain links (3) which face away from a deflecting roller (1) and have at least one web (13, 17, 19) located adjacent the outer link plates (4) and/or the intermediate link plates (5) and provided with through-bores (14) for the link pins (6) which pass through them, characterised in that the covers (11) are formed with protective surfaces (9) which extend over the width (7) of the outer surface (8) of the chain links (3) which faces away from a deflecting roller (1), are convex in the longitudinal direction of the flyer chain (2) and are concave in the direction transverse to the flyer chain (2), so that supply lines (23) which slide over the flyer chain (2) are centred on the protective surfaces (8).

2. Flyer chain according to claim 1, characterised by having T-shaped covers (12) inserted with their webs (13) between the plates (5) of the chain links (3).

3. Flyer chain according to claim 1, characterised by having U-shaped covers (16) with their flanges (19) overlapping the outer plates (4) of the chain links (3).

4. Flyer chain according to claim 1, characterised by having L-shaped covers (15) with one limb (17) lying on the outer plates (4) of the chain links (3) and their other limb (18) overlapping the outer surface (8) of the chain links (3).

5. Flyer chain according to one or more of claims 1 to 4, characterised in that at least the corners (22) of the protective surfaces (9) are rounded off.

## Revendications

1. Chaîne de type "flyer", avec des éléments de chaîne (3) en forme de maillons mutuellement reliés de façon articulée par des tourillons de chaîne (6) et constitués de maillons extérieurs (4) et de maillons intermédiaires (5), ainsi qu'avec des éléments de recouvrement non métalliques (11) pourvus d'une face de blindage (9) pour les faces extérieures (8) des maillons de chaîne (3) qui sont opposées à une poulie de renvoi (1), et d'au moins une branche (13, 17, 19) disposée au voisinage des maillons extérieurs (4) et/ou des maillons intermédiaires (5) et présentant des perçages traversants (14) pour les tourillons de chaîne (6) qui y sont enfilés, **caractérisée** en ce que les éléments de recouvrement (11) sont réalisés avec une face de blindage (9) qui s'étend sur la largeur de la face extérieure (8), opposée à la poulie de renvoi (1), des maillons de chaîne (3) et qui est convexe dans la direction longitudinale de la chaîne de type "flyer" (2) et concave dans la direction transversale de la chaîne de type "flyer" (2), de telle sorte que des conduites d'alimentation (23) glissant sur la chaîne de type "flyer" (2) se centrent sur les faces de blindage (9).

2. Chaîne de type "flyer" selon la revendication 1, **caractérisée** par des éléments de recouvrement (12) en forme de T, insérés par leur plus grande branche (13) entre les maillons (5) des éléments de chaîne (3).

3. Chaîne de type "flyer" selon la revendication 1, **caractérisée** par des éléments de recouvrement (16) en forme de U, dont les ailes (19) engagent en recouvrement les maillons extérieurs (4) des éléments de chaîne (3).

4. Chaîne de type "flyer" selon la revendication 1, **caractérisée** par des éléments de recouvrement (15) en forme de L, dont la première branche (17) s'applique contre les maillons extérieurs (4) des éléments de chaîne (3) et dont l'autre branche (18) engage en recouvrement la face extérieure (8) des éléments de chaîne (3).

5. Chaîne de type "flyer" selon une ou plusieurs des revendications 1 à 4, **caractérisée** en ce qu'au moins les coins (22) des faces de blindage (9) sont arrondis.
